# EUROPÄISCHE PATENTANMELDUNG

(11) **EP 2 431 128 A1**
(43) Veröffentlichungstag der Anmeldung: **21.03.2012**
(21) Anmeldenummer: 10177339.8
(22) Anmeldetag: 17.09.2010
(51) Int. Cl.: B24C 1/04, B24C 7/00

(54) **Verfahren zur Herstellung eines formstabilen Filter- oder Siebeinsatzes**

(71) Anmelder: Inflotek B.V., 2343 ND Oegstgeest (NL)
(72) Erfinder: Die Erfindernennung liegt noch nicht vor
(74) Vertreter: Korsten, Marius

(57) **Zusammenfassung**

Verfahren zur Herstellung eines formstabilen Filter- oder Siebeinsatzes mit in Durchgangsrichtung eines Schneidstrahles sich verjüngenden Durchgangsöffnungen (2), wobei der aus einer in einem Schneidkopf positionierten Düse austretende fluide Schneidstrahl über einen Rohling geführt wird, ist so ausgebildet, dass für eine Schneidunterbrechung dem Schneidstrahl nach dem Düsenaustritt seitlich ein die Energiedichte des Schneidstrahls reduzierendes Störmittel zugeführt wird.

## Beschreibung

Die Erfindung betrifft ein Verfahren zur Herstellung eines formstabilen Filter- oder Siebeinsatzes nach dem Oberbegriff des Anspruchs 1 sowie einen nach dem Verfahren hergestellten Filter- oder Siebeinsatz.

Filter- oder Siebeinsätze aus einem formstabilen Material, beispielsweise aus Edelstahlblechen, Keramik oder anderen geeigneten, vornehmlich harten Materialien, kommen in unterschiedlichen Funktionsbereichen zum Einsatz. Beispielhaft seien hier Extrusionsprozesse genannt oder eine beispielsweise bei der Windelherstellung übliche Vliesbetttrocknung. Hierbei werden Filter- oder Siebeinsätze gefordert, die einen großen Gesamt-Öffnungsquerschnitt aufweisen, bei gleichzeitig höchster mechanischer Stabilität. Dies bedingt naturgemäß eine Vielzahl von die Durchgangsöffnungen voneinander trennende Stege.

Bei einem bekannten Verfahren zur Herstellung eines Filter- oder Siebeinsatzes - der Einfachheit halber wird im Folgenden lediglich der Siebeinsatz benannt -, wird der Schneidstrahl, vielfach ein mit Abrasivmittel beaufschlagter Wasserstrahl, so geführt, dass in Vorschubrichtung zwischen zwei Sieböffnungen ein Steg verbleibt, wozu die Vorschubgeschwindigkeit des Schneidkopfes entsprechend der gewünschten Steglänge, die den Abstand zwischen zwei Sieböffnungen bestimmt, so weit erhöht wird, dass ein Materialabtrag zumindest so weit unterbunden ist, dass der Schneidstrahl das Material nicht durchdringt.

D.h., nach einem Schneiden einer Sieböffnung wird der Schneidkopf kurzzeitig stark beschleunigt und anschließend stark abgebremst. Die beim Beschleunigen und Abbremsen entstehenden Massenkräfte wirken sich äußerst ungünstig auf die Stabilität der Schneideinrichtung aus, ebenso wie auf deren Schwingungsverhalten, das letztendlich den Anforderungen an eine optimierte Schnittqualität nicht gerecht wird.

Selbstverständlich ist die Vorschubgeschwindigkeit bzw. die Beschleunigung relativ zu sehen, d.h., zum Einbringen der Sieböffnungen kann entweder der Schneidkopf bei fest stehendem Rohling oder der Rohling bei fest stehendem Schneidkopf bewegt werden, wobei das Fluid unter hohem Druck, beispielsweise 3000 - 4000 bar, durch eine im Düsenkopf positionierte Düse geführt wird.

Eine andere bekannte Konstruktion zur Herstellung eines Siebeinsatzes, weist zur Unterbrechung des Schneidstrahles, um ein Loch- oder Schlitzmuster in den Rohling einbringen zu können, Schaltventile auf, mit denen die Zufuhr des unter dem genannten Druck stehenden Fluids vor dem Schneidkopf bzw. vor Eintritt in die Düse unterbrochen wird.

Daraus ergeben sich naturgemäß erhebliche Probleme, insbesondere bei einer entsprechenden Schalthäufigkeit, wie sie bei der Herstellung filigraner Muster erforderlich ist.

Durch den anstehenden hohen Druck wird das Schaltventil außerordentlich beansprucht, so dass dessen Standzeit sehr gering ist. Die sich daraus ergebenden Kosten aufgrund der Stillstandszeiten zum Auswechseln des Schaltventils sowie dessen Beschaffung, stehen einem optimierten Betrieb entgegen.

Wird zur Druckerzeugung eine Plungerpumpe eingesetzt, die systembedingt einen ständig gleichbleibenden Druck erzeugt und nur mit einer installierten Überströmtechnik betreibbar ist, liegt ebenfalls eine außerordentlich hohe Beanspruchung vor, die einen befriedigenden Betrieb nicht zulässt.

Darüber hinaus lässt auch die Qualität der eingebrachten Sieböffnungen zu wünschen übrig, da mit den bekannten Verfahren insbesondere beim Schneiden von schlitzförmigen Öffnungen sich deren Ränder relativ ausgefranst im Sinne von gezackt darstellen.

Bei einer für bestimmte Einsätzfälle geforderten hohen Dichte von 5 x 10³ bis 10⁶ Sieböffnungen pro Quadratmeter wird die relativ geringe Breite der einzelnen Öffnungen durch die ausgefransten Ränder bereichsweise verkleinert, was sich nachteilig auf die Sieb- bzw. Filterwirkung auswirkt, da ein definierter Durchlass praktisch nicht gewährleistet ist.

Der Erfindung liegt die Aufgabe zugrunde, ein Verfahren der gattungsgemäßen Art so weiterzuentwickeln, dass mit konstruktiv geringem Aufwand ein wirtschaftlicherer Betrieb des Schneidstrahlens möglich ist sowie einen Filter- oder Siebeinsatz zu schaffen, dessen Filter- oder Siebwirkung verbessert wird.

Diese Aufgabe wird durch ein Verfahren mit den Merkmalen des Anspruchs 1 bzw. durch ein mittels des Verfahrens hergestellten Filter- oder Siebeinsatz gelöst.

Das neue Verfahren zeichnet sich vor allem dadurch aus, dass auf den Einsatz von Schaltventilen zur Funktionsunterbrechung des Schneidstrahles im Bereich der Zufuhr des Hochdruck-Fluids gänzlich verzichtet werden kann. D.h., der Hochdruck steht permanent in der Zuführleitung an, so dass auch der Einsatz einer Plungerpumpe zur Druckerzeugung ohne zusätzliche, aufwändige Technik problemlos möglich ist.

Wie sich überraschend gezeigt hat, wird durch das Zuführen des Störmittels die gerichtete Geschwindigkeit, mit der der Schneidstrahl aus dem Schneidkopf austritt bzw. die Beschleunigung eines gegebenenfalls zugeführten Abrasivmittels so weit reduziert, dass keine Schneidwirkung eintritt, wobei bei relativer Weiterführung des Schneidkopfes in den nicht beaufschlagten Bereich des zu bearbeitenden Materials kein erkennbarer Abtrag entsteht.

Bei Unterbrechung des Störstrahls, d.h. in Funktion des Schneidstrahls, erfolgt die unmittelbare Freisetzung der Schneidenergie, so dass bei einer kontinuierlichen Relativbewegung des Schneidkopfes in Schneidrichtung eine relativ scharfe, die Ränder der Öffnung bildende Schneidkante entsteht, entsprechend dem erfindungsgemäßen Filter- oder Siebeinsatz.

Der insoweit weitgehend kontinuierliche Verlauf der sich gegenüberliegenden Ränder der Öffnung schafft die Bedingung für eine optimale Filter- bzw. Siebwirkung, da nur solche Partikel Durchlass finden, die maximal dem zugeordneten Abmaß entsprechen.

Das Störmittel kann aus einem flüssigen oder gasförmigen Medium bestehen, wie Wasser bzw. Luft, aber auch aus einem Festkörper, z.B. einem Störstift, der in den Schneidstrahl geführt wird.

Die Zufuhr des Störmittels erfolgt rechnergesteuert, um beispielsweise ein Muster zu erzeugen, wobei einer Gas- oder Flüssigkeitsquelle als Störquelle nachgeschaltet ein Absperrventil in Form eines Schnellschaltventils vorgesehen ist.

In an sich bekannter Weise kann dem aus der Düse austretenden Strahl ein Abrasivmittel zugeführt werden in Form von rieselfähigem Stoff, wie Sand oder dergleichen, oder in Form einer Suspension, beispielsweise einer Mischung aus Sand und Wasser.

Bei einer Funktionsunterbrechung des Schneidstrahls kann mit Zuschaltung des Störmittels eine vorzugsweise ventilgesteuerte Abschaltung der Abrasivmittel-Zufuhr erfolgen, wobei beide Schaltvorgänge abhängig voneinander synchron getätigt werden.

Zwar ist aus der WO 91112930 A1 ein Verfahren zum Schneiden von Materialien mit einem Schneidkopf bekannt, in dessen Austrittskanal ein Fluidkanal mündet, allerdings dient die darin geoffenbarte Vorrichtung zur Durchführung des Verfahrens ausschließlich dem Einsatz bei hohem Umgebungsdruck, wobei mittels des im Betrieb konstant seitlich zugeführten Fluids ein Abrieb des Austrittskanals vermindert sowie die Strahlgeometrie des Schneidstrahls beeinflusst werden soll. Eine Funktionsunterbrechung des Schneidstrahls ist mit dieser Konstruktion nicht möglich.

Dies trifft gleichermaßen auf eine Vorrichtung zu, die aus der WO 2000/056466 bekannt ist. Hierbei dient der seitlich in den Austrittskanal zugeführte Fluidstrahl ausschließlich der Kohärenz-Veränderung des Schneidstrahls, um in ihrer Beschaffenheit, insbesondere in ihrer Härte unterschiedliche Materialien befriedigend schneiden zu können.

Vorteilhafte Weiterbildungen der Erfindung sind in den Unteransprüchen gekennzeichnet.

Das erfindungsgemäße Verfahren und ein damit hergestellter Filter- oder Siebeinsatz werden nachfolgend anhand der beigefügten Zeichnungen beschrieben.

Es zeigen:
- Figur 1: einen gemäß der Erfindung hergestellten Filtereinsatz in einer Draufsicht
- Figur 2: einen stark vergrößerten Ausschnitt aus dem Filtereinsatz in einer Schnittdarstellung gemäß der Linie II-II in Figur 1
- Figur 3: einen stark vergrößerten Teilausschnitt des Filtereinsatzes in einer Draufsicht
- Figur 4: zum Vergleich einen gleichfalls stark vergrößerten Ausschnitt eines Filtereinsatzes nach dem Stand der Technik, ebenfalls in einer Draufsicht.

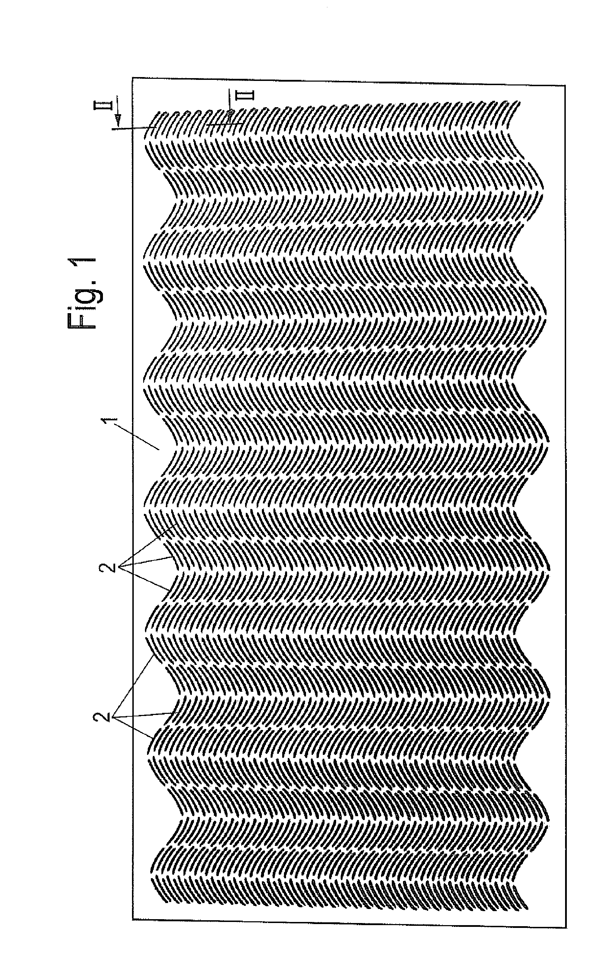

In der Figur 1 ist ein Filtereinsatz aus einem formstabilen Material dargestellt, bestehend aus einer Platte 1, die eine Vielzahl von schlitzförmigen Durchgangsöffnungen 2 aufweist, die jeweils durch Stege voneinander getrennt sind.

Die Durchgangsöffnungen 2 werden durch einen aus einer in einem Schneidkopf positionierten Düse einer nicht dargestellten Vorrichtung austretenden fluiden Schneidstrahl hergestellt, der entsprechend den in Vorschubrichtung verbleibenden Stegen zwischen zwei Durchgangsöffnungen 2 unterbrochen wird.

Hierzu wird dem Schneidstrahl nach dem Austritt aus der Düse seitlich ein die Energiedichte des Schneidstrahls reduzierendes Störmittel, bevorzugt rechnergesteuert, zugeführt.

Als Störmittel kann ein flüssiges oder gasförmiges Medium eingesetzt werden, alternativ ein Störstift, der in den Schneidstrahl geführt wird.

Ein Abrasivmittel, das einem Fluid zugeführt wird, zur Erhöhung der Schneidwirkung, kann abhängig von der Störmittelzufuhr erfolgen.

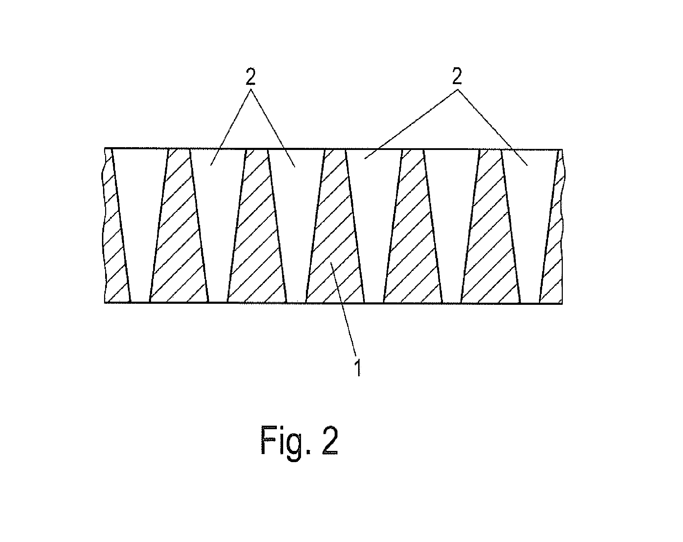

Wie insbesondere die Figur 2 sehr deutlich zeigt, verjüngen sich die Durchgangsöffnungen 2 in Durchgangsrichtung des Schneidstrahles.

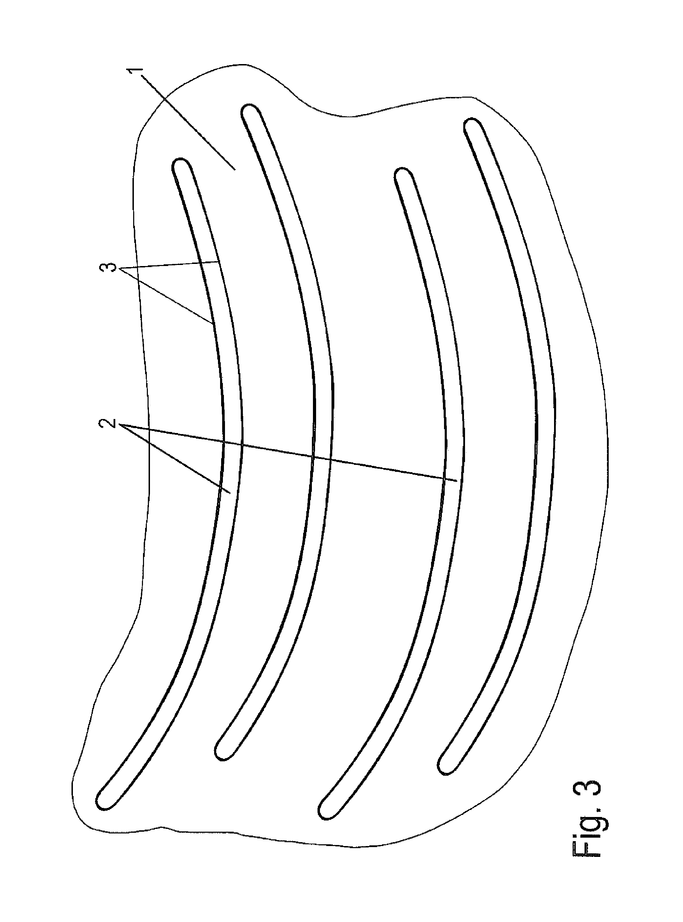

In der Figur 3 sind mehrere nebeneinander liegende, schlitzförmige Durchgangsöffnungen 2 erkennbar, deren sich gegenüberliegende Ränder 3 relativ scharfkantig ausgebildet sind, so dass sich in Längserstreckung der Durchgangsöffnungen 2 ein weitgehend gleichmäßiger Abstand zwischen den Rändern 3 ergibt.

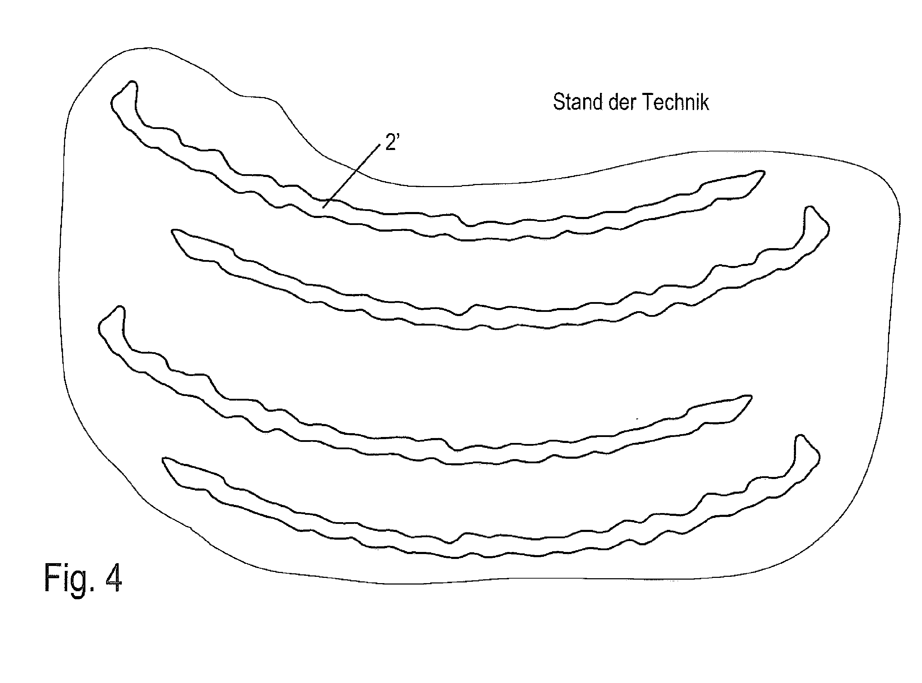

Zur Verdeutlichung der dargestellten Qualitätsverbesserung der Durchgangsöffnungen 2 sind in der Figur 4 Durchgangsöffnungen 2' dargestellt, die mittels eines Verfahrens nach dem Stand der Technik eingebracht sind. Es ist deutlich zu sehen, dass die sich gegenüberliegenden Ränder zackenförmig ausgefranst sind, so dass ein, bezogen auf die Länge der Durchgangsöffnungen 2' diskontinuierlicher Abstand zwischen den Rändern gegeben ist.

## Patentansprüche

1. Verfahren zur Herstellung eines formstabilen Filter- oder Siebeinsatzes mit in Durchgangsrichtung eines Schneidstrahles sich verjüngenden Durchgangsöffnungen (2), wobei der aus einer in einem Schneidkopf positionierten Düse austretende fluide Schneidstrahl über einen Rohling geführt wird, **dadurch gekennzeichnet, dass** für eine Schneidunterbrechung dem Schneidstrahl nach dem Düsenaustritt seitlich ein die Energiedichte des Schneidstrahls reduzierendes Störmittel zugeführt wird.

2. Verfahren nach Anspruch 1, **dadurch gekennzeichnet, dass** die Zufuhr des Störmittels rechnergesteuert erfolgt.

3. Verfahren nach Anspruch 1 oder 2, **dadurch gekennzeichnet, dass** als Störmittel ein flüssiges oder gasförmiges Medium eingesetzt wird.

4. Verfahren nach einem der vorstehenden Ansprüche, **dadurch gekennzeichnet, dass** als Störmittel ein Störstift in den Schneidstrahl geführt wird.

5. Verfahren nach einem der vorstehenden Ansprüche, **dadurch gekennzeichnet, dass** eine Zufuhr von Abrasivmittel abhängig von der Störmittelzufuhr erfolgt.

6. Mit einem Verfahren nach Anspruch 1 hergestellter formstabiler Filter- oder Siebeinsatz, mit mehreren, in Durchgangsrichtung sich verjüngenden, abständig zueinander angeordneten Durchgangsöffnungen (2), **dadurch gekennzeichnet, dass** die Ränder (3) insbesondere jeder schlitzförmigen Durchgangsöffnung (2) weitgehend scharfkantig sind.

7. Filter- oder Siebeinsatz nach Anspruch 6, **dadurch gekennzeichnet, dass** die Ränder (3) jeder Durchgangsöffnung (2) durchgehend parallel verlaufen.
